# EUROPEAN PATENT APPLICATION

(11) **EP 3 260 290 A1**
(43) Date of publication of application: **27.12.2017**
(21) Application number: 16175976.6
(22) Date of filing: 23.06.2016
(51) Int. Cl.: B32B 7/12, B32B 27/20, B32B 27/32, B32B 27/36, E04B 1/78, E04D 3/35, F16L 59/02, A41D 31/00, E04B 1/76

(54) **THERMALLY INSULATING CLOTHS**

(71) Applicant: Microtherm N.v., 9100 Sint Niklaas (BE); PRTC NV, 2830 Tisselt (BE)
(72) Inventor: VAN GUCHT, Baudewijn, 2880 Bornem (BE); ABDUL-KADER, Oras, 9100 Sint Niklaas (BE)
(74) Representative: Van Steenlandt, Wim August Maria

(57) **Abstract**

A thermally insulating cloth is provided. The thermally insulating cloth has a layered structure comprising at least three layers, a first and a second outer textile layer providing the outer surfaces of said cloth, and an intermediate layer, wherein said first and said second outer textile layer are laminated to the intermediate layer, said first outer textile layer having an air permeability of less than or equal to 40 cc/sec*5cm², said second outer textile layer having air permeability of less than or equal to 40 cc/sec*5cm², said intermediate layer comprising a textile fabric comprising aerogel powder, in an amount in a range of 1 to 70%w.

## Description

### Field of the invention

The present invention relates to thermally insulating cloths and methods to provide such cloths.

### Background of the invention

Aerogel is known nowadays for its thermal insulation properties.
Cloths being filled with such aerogels thereby providing cloths suitable for thermal insulation, are known form e.g. EP3023528A1.
Cloths made using such method usually suffer from dust release when installed, e.g. bended around tubing to be thermally insulated. The application of a coating to such cloths causes the cloths to become less bendable and might hinder its application.

### Summary of the invention

It is an object of the present invention to provide an alternative thermally insulating cloth which suffer less of dust release during installation and once installed.

According to a first aspect of the invention, a thermally insulating cloth is provided. The thermally insulating cloth has a layered structure comprising at least three layers, a first and a second outer textile layer providing the outer surfaces of said cloth, and an intermediate layer, wherein said first and said second outer textile layer are laminated to the intermediate layer, said first outer textile layer having an air permeability of less than or equal to 40 cc/sec*5cm², said second outer textile layer having air permeability of less than or equal to 40 cc/sec*5cm², said intermediate layer comprising a textile fabric comprising aerogel powder, in an amount in a range of 1 to 70%w.

The %w of the aerogel powder is based upon the weight of the intermediate layer in which it is present.

More preferred, the intermediate layer comprises a textile fabric comprising aerogel powder in an amount in a range of 15 to 50%w, such as in the range of 20 to 40 %w.
The aerogel content of the cloth according to the invention may be more than or equal to 20 kg /m³, more preferably more than or equal to 50 kg/m³ such as in the range of 50 to 80 kg/m³, e.g. about 50 or about 60 kg/m³ or about 70 kg/m³.

The aerogel preferably is hydrophobic and cause no corrosion under insulation (CUI).

The air permeability is measured using any suitable apparatus, measuring the volume of air passing through a surface of a sample at 98 Pascal pressure drop between the surfaces of the sample, typically using a circular surface of 25mm diameter.

More preferably the air permeability of the first and/or second outer textile layer is less than or equal to 35 cc/sec*5cm², such as less than or equal to 20 cc/sec*5cm² or even less than or equal to 5 cc/sec*5cm²

A product is understood thermally insulating when it has a thermal conductivity of less than 50 mW/m*K.

According to some embodiments, the first and/or the second outer textile layer may have a thickness in the range of 0.05 to 3 mm. According to some embodiments, the first outer textile layer may have a thickness in the range of 0.05 to 3 mm. According to some embodiments, the second outer textile layer may have a thickness in the range of 0.05 to 3 mm .

The first and/or the second outer textile layer may have a thickness in the range of 0.1 to 3mm, such as in the range of 0.1 to 0.5 mm, more preferred in the range of 0.2 to 0.3 mm.
Optionally the thickness of the first and the second outer textile layer are identical.

According to some embodiments, the first and/or the second outer textile layer may have a density in the range of 3 to 300 kg/m³ . According to some embodiments, the first outer textile layer has a density in the range of 3 to 300 kg/m³ . According to some embodiments, the second outer textile layer has a density in the range of 3 to 300 kg/m³.

The first and/or the second outer textile layer may have a density on the range of 15 to 25 gram per square meter, more preferred in the range of 17 to 21 gram per square meter.
Optionally the density of the first and the second outer textile layer are identical.

According to some embodiments, the first and/or the second outer textile layer may have a surface weight of 10 to 30 g/m². According to some embodiments, the first outer textile layer may have a surface weight of 10 to 30 g/m². According to some embodiments, the second outer textile layer may have a surface weight of 10 to 30 g/m².

The first and/or the second outer textile layer may have a surface weight of 15 to 25 g/m². Optionally the surface weight of the first and the second outer textile layer are identical.

The first and second outer layers are textile layers, i.e. they are pliable around a tubular object having a bending radius of 1.5 inch (3.81 cm) or less.

The fibers of the first, the second and/or the intermediate layer may be selected from the group consisting of E glass fibers, C glass fibers, S glass fibers, silica fibers, ceramic fibers, and organic fibers, preferably PE or PET fibers.

The fibers used for the first, second and/or intermediate layer may have a diameter in the range of 5 to 20 µm, , such as in the range of 6 to 20µm, more preferably in the range of 9 to 13 µm, such as in the range of 9 to 11µm. The fibers preferably may be staple fibers with an average length of less than 15mm, and preferably about 10mm. The fibers preferably may have a maximum length of less than 15mm, and preferably about 10mm.

The first, the second and/or the intermediate layer may comprising high temperature resistant fibers, i.e. having a glass transition temperature of more than 200°C, such as more than 500°C, even more than 800°C.

According to some embodiments, the fibers of said first and/or said second outer textile layer and/or said intermediate layer are fibers having a glass transition temperature of more than 200°C.

Optionally the glass transition temperature (Tg) of the temperature resistant fibers is more than 500°C , such as more than 800°C.

According to some embodiments, the first and/or second outer textile layer may comprise glass fibers.

As an example, the intermediate layer comprises fibers selected from the group consisting of E glass fibers, C glass fibers, S glass fibers, silica fibers, ceramic fibers, and organic fibers, preferably PE or PET fibers.

According to some embodiments, the intermediate layer may comprise glass fibers

The fibers of the first and/or second outer textile layer and/or the intermediate layer may even comprise only glass fibers.
Optionally the fibers of the first and the second outer textile layer and/or the intermediate layer are provided out of identical material, such as either E glass fibers, C glass fibers, S glass fibers, silica fibers or ceramic fibers.

The first and/or second outer layer preferably have a binder content, in particularly when being a nonwoven layer, which binder content is preferably less than 15%w, most preferably less than 12%w, typically 10 to 11%w. This %w is expressed over the total weight of the outer layer. The preferred binder is polyvinylalcohol (PVA) binder.

The first and/or second outer layer preferably have a tensile strength in machine direction (MD) and cross direction (CD) in the range of 20 to 100 N/5cm, measured according to ISO1924/2.

The first and/or second outer textile layer is provided with an adhesive in order to be able to laminate the layers to the intermediate layer. The preferred adhesive is a polyamide based adhesive. The adhesive may be applied as a coating to the first and/or second layer. An adhesive, optionally applied as a coating, in an amount of 4 to 20 gram per square meter is preferred, more preferred in an amount of 4 to 10 gram per square meter, such as about 8 gram per square meter. Preferably this adhesive is applied on only one side of the first and second layer. The side being provided with adhesive is used to contact the intermediate layer.

The first, second and intermediate layer may be laminated to each other by thermal or solvent lamination. Most preferred, the layers are laminated to each other using thermal or heat lamination, e.g. in a calendering.

The first outer textile layer may comprise a woven, nonwoven, kitted or braided textile fabric.
The second outer textile layer may comprise a woven, nonwoven, kitted or braided textile fabric.

According to some embodiments, the first outer textile layer may comprise a nonwoven textile fabric.

Optionally the second outer textile layer comprises a nonwoven textile fabric. Optionally the nonwoven textile fabric of the first and the second outer textile layer are identical.

According to some embodiments, the first and said second outer textile layer may be identical.

According to some embodiments, the textile fabric of said intermediate layer may have a thickness in the range of 5 to 50 mm.

The thickness may be in the range of 5 to 40 mm, preferred in the range of 5 to 25 mm, such as 10mm.

The intermediate layer may comprise a woven, nonwoven, kitted or braided textile fabric.
Preferably the intermediate layer is binder-free.

According to some embodiments, the intermediate layer may comprise a nonwoven textile fabric.

According to some embodiments, the intermediate layer may have a density on the range of 100 to 180 kg/m3.

The intermediate layer may have a density in the range of 110 to 150 kg/m³, such as in the range of 110 to 130 kg/m³, e.g. about 110 kg/m³.

According to some embodiments, the intermediate layer may have a surface weight of 1000 to 1800 g/m².

The said intermediate layer may have a surface weight of 1000 to 1800 g/m², such as in the range of 1100 to 1800-g/m², more preferred in the range of 1100 to 1500 g/m², e.g. in the range of 1100 to 1300 g/m², such as about 1100 g/m². The aerogel powder used may be any aerogel suitable for thermal insulation. The aerogel powder may be silicon oxide (silica) aerogels, alumina aerogels, zirconia aerogels, titania aerogels, metal oxide aerogels, even polymeric aerogels, or combinations of them. Silicon oxide (silica) aerogels are preferred.

The aerogel powder may have a density in the range of 30 to 100 kg/m³, more preferred in the range of 40 to 60 kg/m³, such as about 50 kg/m³.

Aerogel powders are composed of particles, which itself forms aggregates. Between the particles, pores are formed. The powder fineness is the typical size of the aggregates.

According to some embodiments, the aerogel powder may have a powder fineness in the range of 0.1 to 50 micron (µm).

More preferred, the powder fineness in the range of less than or equal to 25 µm, e.g. in the range of 0.1 to 20 µm, most preferred in the range of 0.1 to 10 µm. The particles itself may have an average diameter of 10 to 12 nm. The pore size is preferably less than 20 nm on average, such as less than 15 nm, e.g. on average about 10nm.

The aerogel powder preferably is hydrophobic, comprising a silane content of less than or equal to 25%w, the %w based upon the total weight of the aerogel powder. The silane content may even be less than or equal to 20%w, such as less than or equal to 16%w.

According to some embodiments, the aerogel powder may have a thermal conductivity of less than 25 mW/m*K

The aerogel powder may have a thermal conductivity in the range of 13 to 22 mW/m*K. Preferably the thermal conductivity is less than 20 mW/m*K, such as in the range of 16 to 18 mW/m*K.
A cloth according to the invention has a thermal conductivity of less than 50 mW/m*K, most preferably less than 40 mW/m*K, such as in the range of 15 to 30 mW/m*K, e.g. in the range of 23 to 24 mW/m*K.

The thermally insulating cloths according to the invention are still flexible while releasing less to no dust during installation and/or use. The cloth is substantially noncombustible and may have a thickness up to 25mm, even up to 50 mm thick.

Next to the aerogel, also other components may be added in the intermediate layer, such as but not limited to IR opacifiers such as SiC, Rutile, or Iron oxide, flame retardants such as flame retardant minerals such as AlOH, MgOH, MgCO₃.3H₂O or any hydrated minerals (synthetic or natural) with endothermic nature or zinc borates, or functional mineral additives such as sound absorbers, or combinations of those.

According to a second aspect of the invention, the thermally insulating cloths are used as thermal insulation.

The cloths may be used to thermally insulate product for various applications such as pipes and building applications. The pipes may be used for the oil sector where temperature applications will be within 200 to 800 °C. cloths according to the invention may be used in cryogenic applications with temperature limit of less than 10°C. The cloths may be used in the building sector for e.g. roofing, celling and floor applications where mineral wools, polystyrene (PS), or polyurethane (PU) shortfalls in performance in thermal insulation properties.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

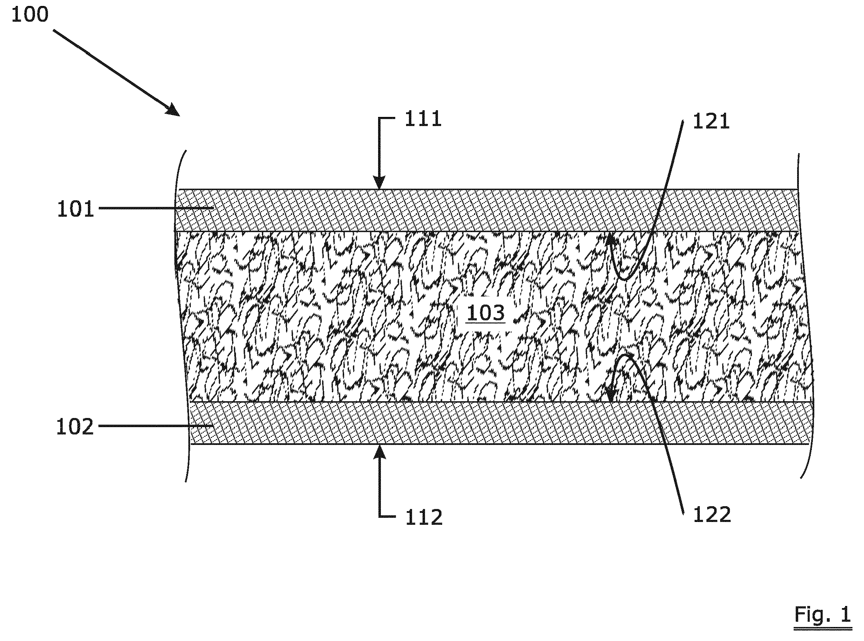

Figure 1 shows a schematically view of a cross section of a thermally insulating cloth according to the invention.

The same reference signs refer to the same, similar or analogous elements in the different figures.

### Description of illustrative embodiments

The present invention will be described with respect to particular embodiments. It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.
Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

A schematically view of a cross section of a thermally insulating cloth 100 is shown in figure 1

A first 101 and a second 102 outer textile layer provides the outer surfaces111 and 112 of the cloth 100. An intermediate layer 103 is provided and contacts the outer layers at the surfaces 121 and 122 opposite to the surfaces 111 and 112. The first and said second outer textile layers are laminated to the intermediate layer. The PA coating present at the surfaces 121 and 122 is melted using a heat source, e.g. IR heating, and is pressed to the intermediate layer 103 by means of one or more calenders.
The PA-coating is present in an amount of 4 gram per m² surface.

The first and second outer textile layers are identical, are also referred to as veils, and have an air permeability of 35 cc/sec*5cm².

The tensile strength is preferably about 50N/5cm MD and 40 N/5cm CD. The layer is a nonwoven glass fiber layer with an average area weight of 21 g/m², a thickness of 0.1 mm and a density of 210 kg/m³.
The glass fibers are in the range of about 10 to 11 µm diameter and have an average length of 10mm.

Suitable first and second outer textile layers are layers provided as fleeces AD-stick E2016.4, available from ADLEY NV, Belgium.

The intermediate layer 103 used has a density of about 110 kg/m³. It comprises needled E-glass fibers of 6 to 13 µm diameter and an average length of about 10mm. The intermediate layer 103 has thickness of 10mm a surface weight of 1100 g/m². The layer is free of binder.

The intermediate layer 103 further comprises aerogel powder, in an amount of 600 to 700 g/m², hence 60 to 70 kg/m³. As such, the intermediate layer 103 is provided with about 35 to 39%w of aerogel.

A suitable aerogel are silicon oxide aerogels with a particle size range of 0.01 to 20µm, a pore mean diameter of 10nm, a bulk density in the range of 0.04 to 0.1 g/cm³, a thermal conductivity in the range of 0.017 to 0.022 W/m*K, a porosity of more than 95%. The aerogel is hydrophobic, and comprises less than 16%W of silanes.
A suitable aerogel is AeroVa™ aerogel powder available from JIOS corporation, Korea.

The intermediate layer 103 of the cloth 100 according to the invention is filled with aerogel making use of the technique as described in EP3023528A1, hereby incorporated in its entirety be reference.

The cloth 100 obtained has a thermal conductivity of 23 to 24 mW/m*K. When used to cover e.g. a tubular pipe by bending the cloth 100 around the outer surface of said tube, e.g. a tube of 1 m diameter, little to no dust is released. The outer layers of textile remain undamaged and do not show cracks.

Alternative cloths according to the invention may be provided using an intermediate layer with an area weight of 1300 kg/m² and a thickness of about 10mm, all other parameters remaining.
A further cloth according to the invention may be provided using an intermediate layer with an area weight of about 600 kg/m² and a thickness of about 5mm.
A further cloth according to the invention may be provided using an intermediate layer with an area weight of about 3500 kg/m² and a thickness of about 25mm. Suitable intermediate layers are provided using glass fiber needle felts F01, F21 and F40 of JSC Valmiera Glass Fiber, Latvia.

Further cloths according to the invention may be provided using an alternative first and/or second outer textile layer being a veil, with tensile strength of about 12N/15mm MD and 5N/15mm CD. The layer is a nonwoven glass fiber layer with an average area weight of 10 g/m², a thickness of 0.1 mm. The glass fibers are in the range of about 10 to 11 µm diameter and have an average length of 12mm. Still an alternative first and/or second outer textile layer being a veil, with tensile strength of about 26N/15mm MD and 11 N/15mm CD. The layer is a nonwoven glass fiber layer with an average area weight of 22 g/m², a thickness of 0.19 mm. The glass fibers are in the range of about 10 to 11 µm diameter and have an average length of 12mm.
Suitable vails are the Optiveil™ series of veils of Technical Fibre Products Ltd, UK , such as 20103A Eglass veils, with areal weight of 10 g/m², 17 g/m², 22 g/m², 30 g/m² or 34 g/m².
These first and second outer textile slayers can be used in combination with the intermediate layers 103 as set out above.

It is to be understood that although preferred embodiments and/or materials have been discussed for providing embodiments according to the present invention, various modifications or changes may be made without departing from the scope and spirit of this invention.

## Claims

1. A thermally insulating cloth having a layered structure comprising at least three layers, a first and a second outer textile layer providing the outer surfaces of said cloth, and an intermediate layer, wherein said first and said second outer textile layer are laminated to the intermediate layer, said first outer textile layer having an air permeability of less than or equal to 40 cc/sec*5cm², said second outer textile layer having air permeability of less than or equal to 40 cc/sec*5cm², said intermediate layer comprising a textile fabric comprising aerogel powder, in an amount in a range of 1 to 70%w.

2. A thermally insulating cloth according to claim 1, wherein said first and/or said second outer textile layer has a thickness in the range of 0.05 to 3 mm.

3. A thermally insulating cloth according to any one of the preceding claims, wherein said first and/or said second outer textile layer has a density in the range of 3 to 300 kg/m³ .

4. A thermally insulating cloth according to any one of the preceding claims, wherein said first an d/or said second outer textile layer has a surface weight of 10 to 30 g/m².

5. A thermally insulating cloth according to any of the preceding claims, wherein said fibers of said first and/or said second outer textile layer and/or said intermediate layer are fibers having a glass transition temperature of more than 200°C.

6. A thermally insulating cloth according to any of the preceding claims, wherein said first and/or said second outer textile layer comprises glass fibers.

7. A thermally insulating cloth according to any of the preceding claims, wherein said intermediate layer comprises glass fibers

8. A thermally insulating cloth according to any of the preceding claims, wherein said first outer textile layer comprise a nonwoven textile fabric.

9. A thermally insulating cloth according to any of the preceding claims, wherein said first and said second outer textile layer are identical.

10. A thermally insulating cloth according to any of the preceding claims, wherein said textile fabric of said intermediate layer has a thickness in the range of 5 to 50 mm.

11. A thermally insulating cloth according to any of the preceding claims, wherein said intermediate layer comprise a nonwoven textile fabric.

12. A thermally insulating cloth according to any of the preceding claims, wherein said intermediate layer has a density on the range of 100 to 180 kg/m³.

13. A thermally insulating cloth according to any of the preceding claims, wherein the aerogel powder has a powder fineness in the range of 0.1 to 50 micron (µm).

14. A thermally insulating cloth according to any of the preceding claims, wherein the aerogel powder has a thermal conductivity of less than 25 mW/m*K

15. the use of a cloth according to any one of the preceding clams, as thermal insulation.
